**Europäisches Patentamt**

(19) **European Patent Office**

**Office européen des brevets**

(11) Veröffentlichungsnummer: **0 052 665 B1**

(12) ## EUROPÄISCHE PATENTSCHRIFT

(45) Veröffentlichungstag der Patentschrift:
16.05.84

(51) Int. Cl.³: **B 65 G 33/24**, B 65 G 65/46, G 01 G 21/22

(21) Anmeldenummer: **80107264.6**

(22) Anmeldetag: **21.11.80**

(54) **Austragsorgan für eine Behälterwaage.**

(43) Veröffentlichungstag der Anmeldung:
02.06.82 Patentblatt 82/22

(45) Bekanntmachung des Hinweises auf die Patenterteilung:
16.05.84 Patentblatt 84/20

(84) Benannte Vertragsstaaten:
AT CH DE GB LI

(56) Entgegenhaltungen:
DE - B - 2 617 354
FR - A - 2 156 446
US - A - 2 743 850
US - A - 3 702 128

(73) Patentinhaber: **CARL SCHENCK AG,
Landwehrstrasse 55 Postfach 40 18, D-6100 Darmstadt
(DE)**

(72) Erfinder: **Müller, Norbert, Dipl.-Ing., Grundstrasse 15,
D-6100 Darmstadt (DE)**
Erfinder: **Holland, Hans-Jürgen, Dr. Ing.,
Wingertsbergstrasse 7, D-6100 Darmstadt (DE)**
Erfinder: **Gurt, Oswald, Jahnstrasse 85,
D-6100 Darmstadt (DE)**

(74) Vertreter: **Brand, Fritz, Dipl.-Ing., Carl Schenck AG
Patentabteilung Landwehrstrasse 55 Postfach 4018,
D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Austragsorgan für eine Behälterwaage

Es ist ein Austragsorgan für eine Behälterwaage, in explosionsdruckstoßfester Ausführung, bekannt, bestehend aus einem trogförmigen, oben offenen Austragsgehäuse mit etwa rechteckigem Anschlußquerschnitt, das an seiner Anschlußöffnung fest mit der Austrittsöffnung eines Waagenbehälters verbindbar ist und in dem zwei Rührwerke sowie eine zwischen und unterhalb der Rührwerke befindliche Austragsschnecke mit im wesentlichen horizontalen Achsen angeordnet sind, wobei die innere Kontur des Gehäuses an die Konturen der Rührwerke und der Austragsschnecke angepaßt ist und hierbei die Austragsschnecke in einem Schneckentrog läuft.

Beim Einsatz von Wägeeinrichtungen in Kohlestaubanlagen oder bei Stäuben, die zu Verpuffungen neigen, ist es aus sicherheitstechnischen Gründen erforderlich, die Waagen und insbesondere auch das Austragsorgan mit Rührwerk und Austragsschnecke in explosionsdruckstoßfester Ausführung entsprechend dem maximalen Explosionsdruck von ca. 10 bar bei einer Kohlenstaubexplosion auszulegen. Wegen der materialabhängigen Austragsbedingungen im Materialeinlauf zur Schnecke ist dabei in bezug auf den Schneckentrog die Gehäuseform vorgegeben. Die vorgegebene Trogform muß hinsichtlich des Innendruckstoßes formstabil sein, d. h. bei einem maximalen Explosionsdruck von ca. 10 bar darf sich das Gehäuse nicht bleibend verformen.

Bei bekannten Austragsorganen entspricht die innere Kontur des Schneckentrogs gleichzeitig der Außenkontur. Die notwendige Steifigkeit des Troggehäuses wird durch Verrippungen und Versteifungen bewirkt, die an der Außenseite angeordnet sind. Daher ergibt sich beispielsweise durch angeschweißte Rippen und Stege mit vielen Schweißnähten eine komplexe Außenform, die einen erheblichen Fertigungsaufwand erfordert und teuer ist.

Aufgabe der vorliegenden Erfindung ist es, eine konstruktive Lösung für das Austragsorgan einer Behälterwaage zu finden, die sowohl die Forderung nach Formstabilität als auch nach einfacher und damit kostengünstiger Herstellung erfüllt. Diese Aufgabe wird durch die in den Patentansprüchen angegebenen Merkmale gelöst. Die Ansprüche erfassen auch Ausgestaltungen der Erfindung.

Durch die erfindungsgemäße Lösung ergeben sich folgende Vorteile. Der die innere Kontur des Gehäuses bildende Mantel kann praktisch ohne Berücksichtigung von Festigkeitsforderungen leicht und damit billig hergestellt werden. Die im Störfall auf den inneren Mantel wirkenden Kräfte werden über das zwischen Innen- und Außenmantel befindliche druckfeste Material auf den Außenmantel übertragen. Der Außenmantel weist eine fertigungstechnisch einfach herzustellende geometrische Form und damit eine hohe Festigkeit und Formstabilität auf und ist in sicherheitstechnischer Hinsicht leicht zu berechnen und fertigungsmäßig einfach herzustellen.

Die Unteransprüche betreffen vorteilhafte Ausgestaltungen der Erfindung. Eine besonders zweckmäßige Anordnung ergibt sich, wenn der äußere Mantel im Querschnitt halbkreisförmig ausgebildet ist.

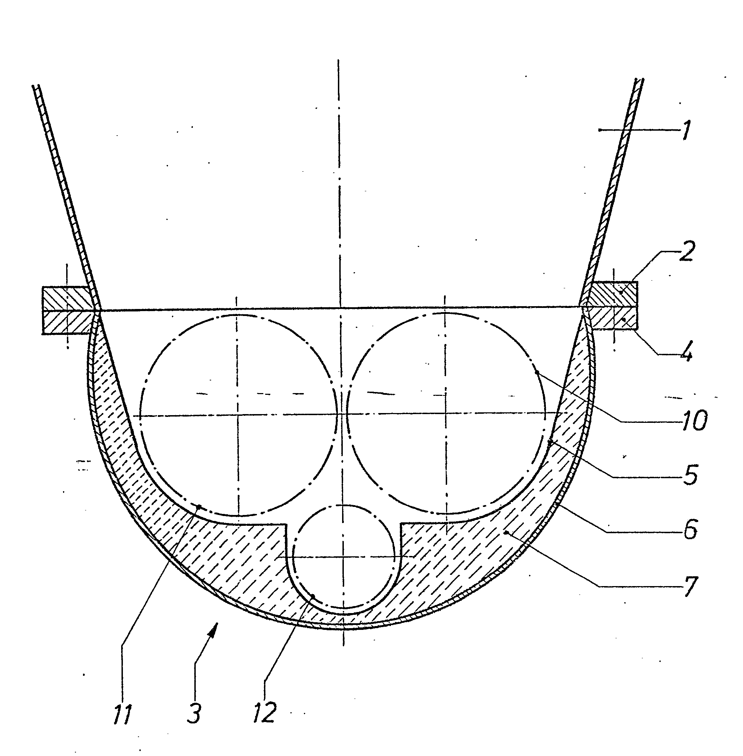

Die Erfindung wird an einem Ausführungsbeispiel in der Zeichnung schematisch dargestellt und in der Beschreibung näher erläutert. Die Zeichnung zeigt im Querschnitt ein Austragsorgan für eine Behälterwaage mit Doppelmantelgehäuse, zwei Rührwerken und einer Austragsschnecke.

In der Zeichnung ist der Waagenbehälter 1 mit Anschlußflanschen 2 nur schematisch angedeutet. Der Anschlußquerschnitt des Waagenbehälters 1 ist rechteckig ausgebildet. Ein Austragsgehäuse 3 mit etwa gleichem Anschlußquerschnitt wie der Waagenbehälter 1 ist über Anschlußflansche 4 fest mit dem Waagenbehälter verbunden.

Das Austragsgehäuse 3 ist als Doppelmantelgehäuse ausgebildet. Es weist einen formgebenden Innenmantel 5, einen druckhaltenden, d. h. die erforderliche Festigkeit gewährleistenden Außenmantel 6 und zwei nicht dargestellte Stirnwände auf. Der Zwischenraum zwischen Innen- und Außenmantel ist mit einem druckfesten Material 7, z. B. Leichtbeton, ausgefüllt. Ein solches Material ist leicht zu verarbeiten, nicht korrodierend, druckfest und temperaturbeständig. Es können auch andere, diese Forderungen erfüllende Materialien verwendet werden. Das gesamte Austragsgehäuse 3 ist bei Druckstoß formstabil.

Im Austragsgehäuse 3 sind zwei Rührwerke 10, 11 und eine Austragsschnecke 12 angeordnet, die in der Zeichnung nur schematisch angedeutet sind. Die Rührwerke sind in den Stirnwänden des Austragsgehäuses 3 durch geeignete Anordnungen gelagert. Die Durchführungen durch die Stirnwände für den Antrieb der Rührwerke 10, 11 bzw. die Lagerungen sind zweckentsprechend abgedichtet.

Die Austragsschnecke 12 ist über ein Austragsrohr, das an der Außenseite einer Stirnwand in Verlängerung des Schneckentrogs im Austragsbehälter angeordnet ist, in bekannter Weise nach außen geführt. Der Austrag des zu fördernden Materials kann beispielsweise an diesem Austragsrohr nach unten hin erfolgen. Die Lagerung und der Antrieb der Austragsschnecke ist in bekannter Weise ähnlich wie bei den Rührwerken ausgebildet.

Der Innenmantel 5 des Austragsgehäuses 3 ist an die Konturen der Rührwerke 10, 11 und der Austragsschnecke 12, ähnlich wie in der Zeichnung dargestellt, angepaßt. Die Austragsschnecke läuft hierbei in einem durch den Innenmantel 5 gebildeten Schneckentrog, der an einer Stirnseite in das Austragsrohr mündet. Bei der Konstruktion und Herstellung des Innenmantels spielen Festigkeitsüberlegungen eine untergeordnete Rolle, da die Festigkeit des Austragsbehälters im wesentlichen durch den Außenmantel gewährleistet ist.

Die Wandstärke des Innenmantels kann daher klein gehalten werden. Der Innenmantel kann auch aus mehreren, leicht herstellbaren Einzelteilen bestehen, die zusammengeschweißt werden. Er ist mit den Stirnwänden und am Anschlußquerschnitt mit den Anschlußflanschen 4 bzw. dem Außenmantel verschweißt.

Der Außenmantel 6 weist einen etwa halbkreisförmigen Querschnitt auf. Es kann auch ein anderer, fertigungstechnisch einfach herzustellender Querschnitt, z. B. in Trapezform, vorgesehen werden. Der Außenmantel ist so berechnet und ausgebildet, daß er die im Störfall auftretenden Beanspruchungen aufnehmen kann. Er ist mit den Anschlußflanschen 4 sowie mit den Stirnwänden verschweißt. Die Stirnwände weisen an der Waagenbehälterseite ebenfalls Anschlußflansche (entsprechend den Flanschen 4) zur Befestigung am Waagenbehälter auf.

Das Austragsgehäuse wird zweckmäßigerweise in Schweißkonstruktion ausgeführt. Nach der Herstellung des Gehäuses wird das druckfeste Füllmaterial 7 durch Einfüllöffnungen an einer Stirnwand in den Zwischenraum des Doppelmantels eingebracht. Das Füllmaterial kann durch einen Rüttler zusätzlich verdichtet werden.

## Patentansprüche

1. Austragsorgan für eine Behälterwaage, in explosionsdruckstoßfester Ausführung, bestehend aus einem trogförmigen, oben offenen Austragsgehäuse (3) mit etwa rechteckigem Anschlußquerschnitt, das an seiner Anschlußöffnung fest mit der Austrittsöffnung eines Waagenbehälters (1) verbindbar ist und in dem zwei Rührwerke (10) sowie eine zwischen und unterhalb der Rührwerke befindliche Austragsschnecke (12) mit im wesentlichen horizontalen Achsen angeordnet sind, wobei die innere Kontur des Gehäuses an die Konturen der Rührwerke und der Austragsschnecke angepaßt ist und hierbei die Austragsschnecke in einem Schnekkentrog läuft, gekennzeichnet durch folgende Merkmale:
das Gehäuse (3) ist als Doppelmantelgehäuse ausgebildet,
der Innenmantel (5) bildet die innere Kontur des Gehäuses (3),
der Außenmantel (6) weist eine fertigungstechnisch einfach herzustellende geometrische Form auf,
der Zwischenraum zwischen dem Innen- und dem Außenmantel ist mit einem druckfesten Material (7) ausgefüllt.

2. Austragsorgan nach Anspruch 1, dadurch gekennzeichnet, daß der Außenmantel (6) im Querschnitt etwa halbkreisförmig ausgebildet ist.

3. Austragsorgan nach Anspruch 1, dadurch gekennzeichnet, daß der Außenmantel (6) im Querschnitt eine trapezähnliche Form aufweist.

4. Austragsorgan nach Anspruch 1, dadurch gekennzeichnet, daß das druckfeste Material (7) aus Leichtbeton besteht.

## Claims

1. Discharge element for a container balance, constructed to be resistant to explosive pressure, consisting of a trough-shaped upwardly open discharge housing (3) with an approximately rectangular connection section, which is capable of being firmly connected at its connection opening with the outlet opening of a balance container (1) and in which two agitators (10) are arranged and a discharge worm (12) located between and beneath the agitators with substantially horizontal axes, the inner contour of the housing being adapted to the contours of the agitators and of the discharge worm and the discharge worm running in a worm trough, characterized by the following features:
the housing (3) is constructed as a double walled housing,
the inner wall (5) forms the inner contour of the housing (3),
the outer wall (6) has a geometrical form which is simple to produce in terms of manufacturing technique,
the intermediate space between the inner wall and the outer wall is filled with a pressure-resistant material (7).

2. Discharge element according to claim 1, characterized in that the outer wall (6) is constructed approximately semi-circular in cross-section.

3. Discharge element according to claim 1, characterized in that the outer wall (6) in cross-section has a trapezium-like shape.

4. Discharge element according to claim 1, characterized in that the pressure-sistant material (7) consists of lightweight concrete.

## Revendications

1. Organe de décharge pour une bascule à récipient, selon une réalisation résistant aux ondes de choc d'une explosion, constitué par un carter de décharge (3) en forme d'auge, ouvert vers le haut, ayant une section de raccordement sensiblement rectangulaire, lequel carter peut être rendu solidaire, à son ouverture de raccordement, de l'ouverture de sortie d'une bascule à récipient (1) et dans lequel sont disposés deux agitateurs (10) ainsi qu'une vis de décharge (12) placée entre les agitateurs et en dessous d'eux avec leurs axes sensiblement horizontaux, le contour intérieur du carter étant adapté aux contours des agitateurs et de la vis de décharge, et la vis de décharge tournant dans une cuve de vis, caractérisé par les caractéristiques suivantes:

le carter (3) est réalisé sous forme de carter à double enveloppe,

l'enveloppe intérieure (5) constitue le contour intérieur du carter (3),

l'enveloppe extérieure (6) a une forme géométrique d'une technique de fabrication simple, et le volume intermédiaire entre l'enveloppe intérieure et l'enveloppe extérieure est rempli d'un matériau (7) incompressible.

2. Organe de décharge selon la revendication 1, caractérisé par le fait que l'enveloppe extérieure (6) a, en coupe transversale, une forme semi-circulaire.

3. Organe de décharge selon la revendication 1, caractérisé par le fait que l'enveloppe extérieure (6) a, en coupe transversale, une forme trapézoïdale.

4. Organe de décharge selon la revendication 1, caractérisé par le fait que la matériau résistant à la pression (7) est un béton léger.